# EUROPÄISCHE PATENTANMELDUNG

(11) **EP 4 443 250 A1**
(43) Veröffentlichungstag der Anmeldung: **09.10.2024**
(21) Anmeldenummer: 23166268.5
(22) Anmeldetag: 03.04.2023
(51) Int. Cl.: G05B 17/02, B24B 19/26

(54) **VERFAHREN ZUR VORAUSLEGUNG EINES SCHLEIFPROZESSES ZUR BEARBEITUNG EINES WERKSTÜCKS**

(71) Anmelder: MTU Aero Engines AG, 80995 München (DE)
(72) Erfinder: Grimmert, Adina, 80995 München (DE); Mika, Milosz, 36-002 Jasionka (PL)

(57) **Zusammenfassung**

Die Erfindung betrifft ein Verfahren (100) zur Vorauslegung eines Schleifprozesses zur Bearbeitung eines Werkstücks (12), aufweisend Schritte des Bereitstellens einer Werkstückrohkontur (112) eines Rohteils des Werkstücks (12), des Bereitstellens einer Kontur (113) eines Schleifwerkzeugs (13), des Bereitstellens eines Prozessmodells (114) und des Bereitstellens eines Bearbeitungsmodells (115) für den Schleifprozess, wobei das Bearbeitungsmodell (115) wenigstens einen einstellbaren Bearbeitungsparameter (aₑ, v_{c}, v_{w}, m, Z) umfasst.

## Beschreibung

Die Erfindung betrifft ein Verfahren zur Vorauslegung eines Schleifprozesses für die Bearbeitung eines Werkstücks. Zudem betrifft die Erfindung ein Verfahren zum Simulieren eines Schleifprozesses eines Werkstücks und ein Verfahren zum Schleifen eines Werkstücks.

Die Auslegung von Schleifprozessen erfolgt zumeist direkt an der Schleifmaschine durch ein iteratives Erproben unterschiedlicher Prozessparameterkombinationen. Eine Alternative der Erprobung an der Maschine bietet die Simulation zur Berechnung von thermischen und mechanischen Belastungen durch den Schleifprozess auf das Bauteil. Für solche Simulationen kommen zumeist rechenzeit- und rechenleistungsintensive Simulationsmethoden zum Einsatz, wie beispielsweise Finite-Elemente Modelle oder "molecular dynamics"-Simulationen.

Die Verwendung solcher Prozesssimulationen ist für eine Vorauslegung und Problemlösung im Serienalltag sehr zeitintensiv und erfordert entsprechend für die gewählten Simulationsmethoden qualifiziertes Personal. Dies kann somit für die Berechnung mehrerer Varianten und Iterationen einen sehr großen Zeitaufwand bedeuten.

Hiervon ausgehend ist es eine Aufgabe der vorliegenden Erfindung, ein insbesondere verbessertes Verfahren zur Vorauslegung eines Schleifprozesses zur Bearbeitung eines Werkstücks vorzuschlagen, insbesondere um eine Parametrisierung eines Schleifprozesses oder einer Simulation eines Schleifprozesses zu unterstützen. Ferner soll ein verbessertes Verfahren zum Simulieren eines Schleifprozesses eines Werkstücks sowie ein verbessertes Verfahren zum Schleifen eines Werkstücks zur Verfügung gestellt werden. Dies wird erfindungsgemäß durch die Lehre der unabhängigen Ansprüche erreicht. Vorteilhafte Ausführungen der Erfindung sind Gegenstand der Unteransprüche.

Zur Lösung der Aufgabe wird ein Verfahren zur Vorauslegung eines Schleifprozesses zur Bearbeitung eines Werkstücks vorgeschlagen. Dieses Verfahren weist Schritte des Bereitstellens einer Werkstückrohkontur eines Rohteils des Werkstücks, des Bereitstellens einer Kontur eines Schleifwerkzeugs, des Bereitstellens eines Prozessmodells und des Bereitstellens eines Bearbeitungsmodells für den Schleifprozess auf, wobei das Bearbeitungsmodell wenigstens einen einstellbaren Bearbeitungsparameter umfasst. In einem weiteren Verfahrensschritt wird wenigstens ein Belastungsmodell an einem Querschnitt des Werkstücks im Schleifprozess berechnet.

Mithilfe des vorgeschlagenen Verfahrens können Belastungen, Kräfte und/ oder Spannungen, welche während und/ oder durch die Bearbeitung in dem Werkstück auftreten, insbesondere vereinfacht berechnet und dargestellt werden, um geeignete Größen für die Bearbeitungsparameter bzw. Prozessparameter im vorgesehenen Schleifprozess an einer Schleifmaschine zu erhalten. Insbesondere können vereinfachte Kraft- und/ oder Temperaturmodelle der Schleifbearbeitung erstellt und/ oder genutzt werden, um Auswirkungen unterschiedlicher Bearbeitungsparameter bzw. Prozessparameter auf die Bauteilbearbeitung bzw. Bauteilbelastungen ermitteln zu können. Hierdurch kann eine Analyse des Schleifprozesses insbesondere im Rahmen der Vorauslegung vereinfacht und/ oder beschleunigt werden.

Ein Schleifprozess ist ein spanendes Fertigungsverfahren mit unbestimmter Schneide zur Bearbeitung von Werkstücken, welches wenigstens einen Schleifhub bzw. Schleifvorgang eines Schleifwerkzeugs an dem Werkstück umfasst, in dem Werkstoff von dem Werkstück an wenigstens einer Bearbeitungsstelle abgetragen bzw. zerspant wird. Die Bearbeitungsstelle kann hierbei eine Berührungsfläche oder -linie zwischen Werkstück und Schleifwerkzeug bzw. zwischen der Werkstückrohkontur und der Kontur des Schleifwerkzeugs sein. Die vorliegende Offenbarung bezieht sich im Wesentlichen auf Schleifverfahren mittels rotierender Werkzeuge, insbesondere Schleifscheiben, welche den Werkstoff von dem Werkstück zerspanen.

Das Rohteil bzw. das Werkstück weist in seinem Rohzustand bzw. unbearbeiteten Zustand an seiner Oberfläche die Werkstückrohkontur auf. Dabei kann die Werkstückrohkontur ein, insbesondere in einer Bearbeitungssituation parallel zu einer Drehachse des Schleifwerkzeugs angeordneter, zweidimensionaler Querschnitt der dreidimensionalen Werkstückrohgeometrie sein. Selbiges gilt für die Kontur des Schleifwerkzeugs, welche ebenfalls ein zweidimensionaler Radialschnitt oder eine Hüllkurve des Werkzeugs bzw. des Schleifscheibenprofils, insbesondere in Vorschubrichtung bzw. orthogonal zur Drehachse des Schleifwerkzeugs, sein kann.

Ein Prozessmodell ist typischerweise ein mathematisches und/ oder deterministisches Modell und weist insbesondere Berechnungsmodelle auf, mittels welchen bei dem oder durch den Bearbeitungsprozess auftretende Prozessgrößen wie insbesondere Kräfte, Belastungen, Temperaturen und/ oder dergleichen bestimmbar, ermittelbar bzw. darstellbar sind und können insbesondere auf empirischen und/ oder experimentelle Erprobungen beruhen. Das Prozessmodell kann dabei beispielsweise konstante und/ oder resultierende Bearbeitungsaspekte für einen vorbestimmen Schleifprozess wie beispielsweise Schleifwerkzeugeigenschaften, einen Werkstückwerkstoff sowie dessen Charakteristika für eine Schleifbearbeitung und/ oder insbesondere dreidimensionale Druck-, Kraft-, Spannungs- und/ oder Temperaturverteilungsmodelle abbilden.

Ein Bearbeitungsmodell weist insbesondere wenigstens einen oder verschiedene insbesondere veränderbar bzw. einstellbar ausgebildete Bearbeitungsparameter auf, welche zur Abstimmung bzw. Anpassung des Schleifprozesses bzw. einer Schleifmaschine verwendet werden können. Einstellbare Bearbeitungsparameter können dabei Werte bzw. Wertebereiche umfassen, welche manuell, teilautomatisiert oder automatisiert veränderbar bzw. verändert dem Bearbeitungsmodell zur Verarbeitung zur Verfügung bzw. bereit gestellt werden können, um so Änderungen bzw. Anpassungen des Schleifprozesses abbilden zu können. Hierdurch können unterschiedliche Parameterkombinationen für den jeweiligen Schleifprozess, einzelne Schleifhübe, das betrachtete Prozessmodell und/ oder das Bearbeitungsmodell rechnerisch erprobt werden, ohne dass eine umfassende Simulation oder experimentelle Versuche für die Werkstückbearbeitung durchgeführt werden muss. Somit kann eine Datenmenge reduziert und ein Berechnungsprozess abgekürzt werden, so dass zeit- und/ oder prozessnahe Aussagen über den Schleifprozess und hieraus entstehende Belastungscharakteristika für das Werkstück getroffen werden können.

Die Erfindung beruht unter anderem auf der Idee, reduzierte deterministische Modelle zur Berechnung von Auswirkungen unterschiedlicher, interaktiv beeinflussbarer Prozessparameter auf Bauteilbelastungen zu nutzen. Hierzu wird vorgeschlagen, die geometrische Form der Werkstücke und Schleifwerkzeuge mathematisch auf 2D-Konturen zu reduzieren bzw. auf 2D-Konturen reduziert bereitzustellen. Hierzu können beispielsweise entsprechende Daten oder Datensätze, welche Informationen bezüglich der Werkstückrohkontur eines Rohteils des Werkstücks, der Kontur des Schleifwerkzeugs und/ oder ein vorbestimmtes oder wählbares Prozessmodell bzw. Bearbeitungsmodell für einen zu berechnenden bzw. auszulegenden Schleifprozess in eine oder mittels einer Datenverarbeitungseinrichtung geladen bzw. importiert und/ oder zur Weiterverarbeitung bereitgehalten werden. Betriebs- bzw. Schleifprozessparameter des Bearbeitungsmodells können insbesondere mittels eines geeigneten Eingabemittels wähl-und/ oder veränderbar ausgebildet sein, um eine Anpassung des Bearbeitungsmodells zu ermöglichen. Insbesondere können beim Bereitstellen des Bearbeitungsmodells vorbestimmte Werte und/ oder Wertebereiche für die Bearbeitungsparameter vorgegeben sein, um ein Berechnen des Belastungsmodells zu ermöglichen.

Auf Basis des Prozessmodells, des Bearbeitungsmodells, den eingestellten bzw. bestimmten Bearbeitungsparametern sowie der Werkstückroh- und Schleifwerkzeugkontur kann, insbesondere mittels einer Datenverarbeitungseinrichtung, ein Belastungsmodell erstellt bzw. berechnet werden. Ein solches Belastungsmodell enthält insbesondere die aus der Schleifbearbeitung resultierenden Kräfte und/ oder Temperaturen und/ oder daraus resultierende Belastungen an dem Werkstück insbesondere in Form wenigstens eines Belastungsmodells an einem Querschnitt des Werkstücks.

Das Belastungsmodell kann Kräfte und Belastungen in insbesondere allen drei Raumrichtungen an dem Bearbeitungsquerschnitt bzw. an der Bearbeitungsoberfläche enthalten bzw. darstellen. Die Belastungen werden hierbei insbesondere an bzw. für jenen Werkstückquerschnitt berechnet bzw. dargestellt, an welchem die Werkstückstückkontur mit der Kontur des Schleifwerkzeugs während des betreffenden Arbeitsprozesses in Eingriff sind. Das Belastungsmodell kann dabei einen oder mehrere Belastungsaspekte, welche durch den Schleifprozess bzw. Schleifvorgang hervorgerufen werden, darstellen bzw. abbilden. Hierdurch können Auswirkungen des Schleifens auf das Werkstück bzw. Bauteil insbesondere ohne physisches Bearbeiten oder aufwendige Simulationsberechnungen ermittelt und so für eine Analyse und/ oder Optimierung des Schleifprozesses genutzt werden.

Bei einer Ausführungsform ist der wenigstens eine Bearbeitungsparameter aus einer Gruppe ausgewählt, welche wenigstens die Bearbeitungsparameter bzw. Prozessparameter Zustellung, Vorschub, Schnittgeschwindigkeit und / oder Schleifscheibenumfangsgeschwindigkeit, Schleifmodus im Sinne des Gegen- und Gleichlaufs und/ oder Anzahl der Schleifhübe enthält. Hierbei kennzeichnet der Vorschub bzw. eine Vorschubgeschwindigkeit insbesondere eine Relativbewegung des Werkstücks in eine Hauptbewegungsrichtung relativ zu dem Werkzeug oder umgekehrt. Die Vorschubgeschwindigkeit kann dabei die Geschwindigkeit des Werkzeugs gegenüber dem Werkstück in Vorschubrichtung an einer Werkzeugmaschine angeben, wobei die Vorschubrichtung insbesondere kontinuierlich am Werkstück entlang und/ oder in das Werkstück hinein gerichtet ist. Die Zustellung bzw. eine Zustelltiefe ist insbesondere ein Bearbeitungsparameter, der eine Eindringtiefe des Werkzeugs im Schleifprozess insbesondere senkrecht zur Drehachse des Schleifwerkzeugs kennzeichnet. Neben einer solchen radialen Zustellung, kann die Zustellung auch radial und/ oder axial bzw. in Form einer Kombination hieraus erfolgen. Die Schnittgeschwindigkeit ist insbesondere eine Umfangsgeschwindigkeit der Schleifscheibe der Schleifmaschine. Zusätzlich kann ein Geschwindigkeitsverhältnis der Scheibenumfangsgeschwindigkeit zur oder entgegen der Vorschubgeschwindigkeit berücksichtigt werden. Der Schleifmodus kann eine Gleich- oder Gegenläufigkeit der Richtung der Schleifscheibenumfangsgeschwindigkeit relativ zur Vorschubgeschwindigkeit angeben. Die Anzahl der Schleifhübe bezeichnet insbesondere die Anzahl der einzelnen Schleifbearbeitungsvorgänge für den gesamten zu betrachtenden Schleifprozess, wobei pro Schleifhub jeweils Vorschub, Zustellung sowie insbesondere Schnittgeschwindigkeit und Schleifmodus individuell anpass- bzw. veränderbar ausgebildet sein können.

Durch eine Veränderung bzw. Modifikation dieser Bearbeitungsparameter, welche insbesondere in sich selbst oder untereinander vorbestimmten Abhängigkeiten unterliegen können, kann ein Schleifergebnis des Schleifprozesses beeinflusst werden. Dabei kann je ein Belastungsmodell pro Schleifhub bestimmt werden, wobei eine Kräfte-bzw. Belastungsverteilung individuell hinsichtlich unterschiedlicher Zielgrößen wie beispielsweise der Reduzierung von Kraftspitzen oder der Produktivität optimiert werden kann. Insbesondere soll die Kräfte- bzw. Belastungsverteilung gleichmäßig ausfallen und/ oder Belastungen mit steigender Schleifhubanzahl sollen sich reduzieren.

Durch das Zusammenwirken von Schnitt-, Werkstück-, Zustell- und Vorschubbewegung erfolgt in dem Schnittprozess bzw. dem jeweiligen Schleifvorgang eine Spanabnahme an der zu bearbeitenden Fläche und damit in dem zu betrachtenden Werkstückquerschnitt, wobei die resultierenden Belastungen in dem jeweiligen Belastungsmodell berechnet bzw. abgebildet werden können. Insbesondere kann durch eine gezielte Veränderung verschiedener oder einzelner Bearbeitungsparameter ein Belastungsprofil für den Schleifprozess bzw. das Werkstück derart bestimmt werden, dass ein möglichst günstiger Schleifprozess erreichbar ist.

Bei einigen Ausführungsformen ist das Prozessmodell in Abhängigkeit eines Werkstoffs des Werkstücks und/ oder wenigstens einer Eigenschaft des Schleifwerkzeugs kalibriert. Das Prozessmodell kann Wirkzusammenhänge von Schleifwerkzeug und Werkstück während der Bearbeitung darstellen, wobei in dem Prozessmodell insbesondere vorbestimmte und/ oder konstante Größen in Abhängigkeit des zu bearbeitenden Werkstücks, einer Werkstückgeometrie und/ oder dem Schleifwerkzeug bestimmt sein oder werden können. Hierbei können für das Werkstück beispielsweise Werkstoffeigenschaften wie ein Härtegrad, eine thermische und chemische Widerstandsfähigkeit, eine chemische Zusammensetzung und/ oder eine Legierung berücksichtigt werden. Berücksichtigte Eigenschaften des Schleifwerkzeugs können beispielsweise eine Geometrie des Schleifwerkzeugs, ein Schleifmittel, eine Korngröße, eine Härtegrad des Schleifkorns und/ oder eine Bindungswerkstoff sein. Durch die Parametrisierung kann das Prozessmodell an die spezifischen Bedingungen des vorauszulegenden Schleifprozesses angepasst sein bzw. werden, um eine realitätsnahe Referenz für die Berechnungen und eine mögliche Prozessanpassung bieten zu können.

Bei einer Ausführungsform weist das Belastungsmodell einen Schleifdruck an dem Werkstück auf. Ein Schleifdruck charakterisiert hierbei insbesondere die Kraft, welche die Schleifscheibe bzw. ihre Kontaktfläche auf das Werkstück ausübt und hängt insbesondere von der angewandten Kraft und der Kontaktfläche zwischen Schleifwerkzeug und Werkstück sowie deren Bewegung zueinander ab. In Betracht kommen hierbei insbesondere ein Schleifdruck in normaler, axialer und oder tangentialer Richtung, insbesondere bezogen auf die Bearbeitungsoberfläche bzw. Kontaktfläche zwischen Werkstück und Schleifwerkzeug.

Bei einigen Ausführungsformen weist das Belastungsmodell ein spezifisches Zeitspanvolumen auf. Das Zeitspanvolumen kann dabei jeweils für einen einzelnen Schleifhub oder den gesamten Schleifprozess bestimmt bzw. berechnet werden. Hierbei ist das spezifische Zeitspanvolumen insbesondere das in einer bestimmten Zeit zerspante Material- bzw. Werkstückvolumen je Breiteneinheit. Mithilfe des spezifischen Zeitspanvolumens kann eine Produktivität des Schleifprozesses und/ oder der Schleifmaschine gemessen und eingestuft werden sowie lokal hohe Zerspanungsleistungen der Schleifscheibe detektiert werden. Zudem kann das Zeitspanvolumen genutzt werden, um insbesondere die Zustellung und/ oder die Vorschubgeschwindigkeit zu justieren.

Bei einer Ausführungsform weist das Belastungsmodell eine schleifhubanzahl- und zustellungsabhängige Schleifkontur auf. Hierbei wird die Schleifkontur für jeden Schleifvorgang, insbesondere jeden der Schleifvorgänge der bestimmten Anzahl an Schleifvorgängen des Schleifprozesses dargestellt. Die Schleifkontur ist dabei diejenige Oberflächengeometrie, welche nach bzw. durch den jeweiligen Schleifvorgangs an dem Werkstück erzeugt wird, wobei beim letzten Schleifvorgang insbesondere die endgültige, gewünschte Zielgeometrie erreicht wird. Dabei wird insbesondere für jeden Schleifvorgang der vorbestimmten Anzahl an Schleifvorgängen die jeweilige Schleifkontur, welche mittels des Schleifwerkzeugs in dem jeweiligen Schnittvorgang in das Werkzeug eingebracht wird, berechnet bzw. bestimmt, um eine, insbesondere grafisch bzw. visuell erfassbare Bewertungsgrundlage bereitstellen zu können.

Bei einer Ausführungsform weist das Verfahren einen weiteren Schritt des Veränderns wenigstens eines der einstellbaren Bearbeitungsparameter auf sowie einen Schritt eines erneuten Berechnens wenigstens eines veränderten bzw. modifizierten Belastungsmodells an dem Querschnitt des Werkstücks im Schleifprozess. Insbesondere ist vorgesehen, dass wenigstens ein Bearbeitungsparameter insbesondere für wenigstens einen Schleifvorgang eingestellt bzw. verändert wird, um eine wahlweise Anpassung bzw. Änderung des jeweiligen Schleifvorgangs und damit des Bearbeitungs- bzw. Schleifprozesses zu ermöglichen. Hierbei kann das Verändern insbesondere an oder mittels einer auf einem Eingabemittel dargestellten Eingabemaske erfolgen, in welcher entsprechende Feldeingaben möglich und Wertangaben für einzelne Bearbeitungsparameter veränderbar ausgestaltet sein können. Hierdurch kann ein für den Anwender leicht erfassbarer Zusammenhang zwischen einer Änderung wenigstens eines Bearbeitungsparameters und dem entsprechend aktualisierten Belastungsmodell ermöglicht werden.

Bei einer Ausführungsform kann das Verfahren einen weiteren Schritt des Ausgebens des wenigstens einen Belastungsmodells aufweisen. Das Ausgeben des Belastungsmodells kann insbesondere in Form von Berechnungswerten, welche insbesondere in einer oder mehreren Grafiken oder eines oder mehrerer Diagramme dargestellt sind, erfolgen. Auf diese Weise sind einzelne Grafiken bzw. Grafiken der jeweiligen berechneten Schleifvorgänge und/ oder Schleifprozesse für einen Anwender visuell vergleichbar. Hierbei kann das Ausgeben beispielsweise mittels einer Anzeigeeinrichtung in Form eines Displays oder anderer geeigneter Darstellungsmittel erfolgen.

Gemäß einem weiteren Aspekt wird ein Verfahren zum Simulieren eines Schleifprozesses eines Werkstücks vorgeschlagen, wobei wenigstens ein Bearbeitungsparameter für den Schleifprozess auf Basis wenigstens eines in einem mit dem hierin beschriebenen Verfahren berechneten Belastungsmodells ausgewählt ist oder wird. Durch die so ermöglichte Vorauswahl an Bearbeitungsparametern kann eine Betrachtungsbasis bzw. ein geeigneter Wertebereich für zu simulierende Bearbeitungsparameter bereits im Vorfeld bestimmt werden bzw. festgelegt sein, sodass eine Zeitersparnis für die eigentliche Simulationsberechnung des Schleifprozesses ermöglicht ist.

Gemäß einem weiteren Aspekt wird ein Verfahren zum Schleifen eines Werkstücks vorgeschlagen, wobei wenigstens ein Bearbeitungsparameter des Schleifprozesses auf Basis der Ergebnisse der Durchführung eines hierin beschriebenen Verfahrens ausgewählt ist oder wird. Hierdurch können anhand vorher analysierter Modelle für den Fertigungsprozess eine Auswahl geeigneter Prozessparameter bzw. Grenzwerte bereitgestellt bzw. festgelegt werden, sodass ein wirtschaftlicher Schleifprozess durchgeführt und gleichzeitig das Risiko für Schleifschäden wie Maßabweichungen, Risse, Spannungen oder Brandflecken, bei der eigentlichen Werkstückbearbeitung bzw. Fertigung reduziert werden kann.

Weitere Vorteile und Anwendungsmöglichkeiten der Erfindung ergeben sich aus der nachfolgenden Beschreibung im Zusammenhang mit den Figuren. Im Allgemeinen gilt, dass Merkmale der verschiedenen hierin beschriebenen beispielhaften Aspekte und/ oder Ausführungsformen miteinander kombiniert werden können, sofern dies im Zusammenhang mit der Offenbarung nicht eindeutig ausgeschlossen ist.

Im folgenden Teil der Beschreibung wird auf die Figuren Bezug genommen, die zur Veranschaulichung spezifischer Aspekte und Ausführungsformen der vorliegenden Erfindung gezeigt sind. Es versteht sich, dass andere Aspekte verwendet werden können und strukturelle oder logische Änderungen der illustrierten Ausführungsformen möglich sind, ohne den Umfang der vorliegenden Erfindung zu verlassen. Die folgende Beschreibung der Figuren ist daher nicht einschränkend zu verstehen. Es zeigt
- Fig. 1: eine beispielhafte Schleifmaschine die eingerichtet ist, ein erfindungsgemäßes Verfahren zum Schleifen eines Werkstücks auszuführen;
- Fig. 2: eine schematische Darstellung eines Ablaufdiagramms eines Ausführungsbeispiels eines erfindungsgemäßen Verfahrens zur Vorauslegung eines Schleifprozesses zur Bearbeitung eines Werkstücks;
- Fig. 3: eine schematische Darstellung einer Eingabemaske zum Verändern wenigstens eines der einstellbaren Bearbeitungsparameter zur Verwendung in einem erfindungsgemäßen Verfahren zur Vorauslegung eines Schleifprozesses zur Bearbeitung eines Werkstücks; und
- Fig. 4a bis 4f: jeweils eine beispielhafte Darstellung eines Belastungsmodells, welches mittels einem erfindungsgemäßen Verfahren zur Vorauslegung eines Schleifprozesses zur Bearbeitung eines Werkstücks berechnet werden kann.

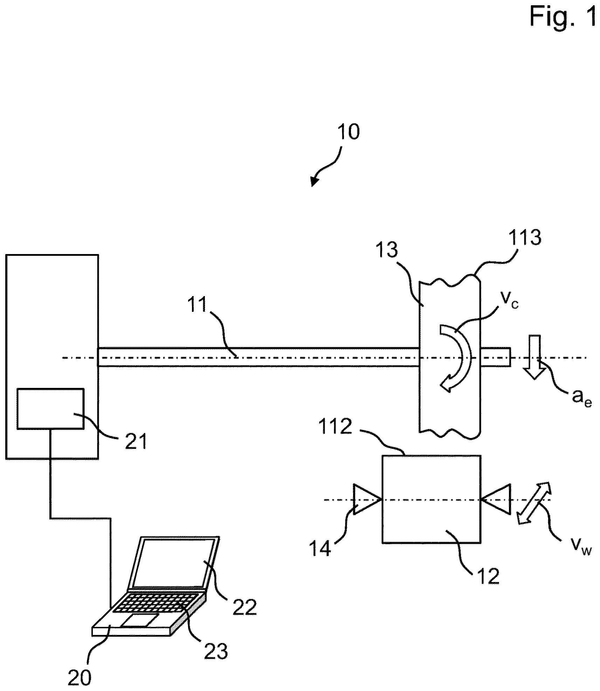

**Fig. 1** zeigt eine schematische Darstellung eines Ausführungsbeispiels einer Schleifmaschine 10 die eingerichtet ist, ein erfindungsgemäßes Verfahren zum Schleifen eines Werkstücks 12 auszuführen.

Die Schleifmaschine 10 weist ein an einer rotierbaren Welle 11 drehfest angeordnetes Schleifwerkzeug 13 auf. Ein zu bearbeitendes Werkstück 12 ist mittels einer Werkstückaufnahme 14 an der Schleifmaschine 10 angeordnet. Dabei weist das Werkstück 12 in seinem unbearbeiteten Zustand eine Werkstückrohkontur 112 auf und das Schleifwerkzeug 13 weist an seiner Bearbeitungsoberfläche eine Kontur 113 auf. Für einen Schleifprozess, welcher eine Anzahl an einzelnen Schnittvorgängen aufweisen kann, ist beispielsweise ein Vorschub v_{w}, eine Zustellung aₑ, eine Schnittgeschwindigkeit v_{c} und/ oder ein Schleifmodus einstellbar. Die Einstellung, Bereitstellung oder Veränderung dieser Betriebsparametern kann über die Schleifmaschine 10 bzw. ein Eingabemittel 23 einer Datenverarbeitungseinrichtung 20, welches beispielsweise über eine Schnittstelle 21 mit der Schleifmaschine 10 verbunden sein kann, erfolgen.

Das Eingabemittel 23 kann beispielsweise ein Eingabemittel 23 einer Datenverarbeitungseinrichtung 20, die Datenverarbeitungseinrichtung 20 selbst oder eine Recheneinrichtung der Schleifmaschine 10 sein. Dabei kann die Datenverarbeitungseinrichtung 20 eine Anzeigeeinrichtung bzw. Ausgabemittel 22 aufweisen und kann eingerichtet sein, ein hierin, insbesondere nachfolgend beschriebenes Verfahren zur Vorauslegung eines Schleifprozesses zur Bearbeitung eines Werkstücks 12 und/ oder Verfahren zum Simulieren eines Schleifprozesses eines Werkstücks 12 durchzuführen. Ferner kann die Datenverarbeitungseinrichtung ein Computerprogramm aufweisen oder ein Computerprogrammprodukt Anweisungen enthalten, die ein Durchführen des hierin vorgeschlagenen Verfahren ermöglichen.

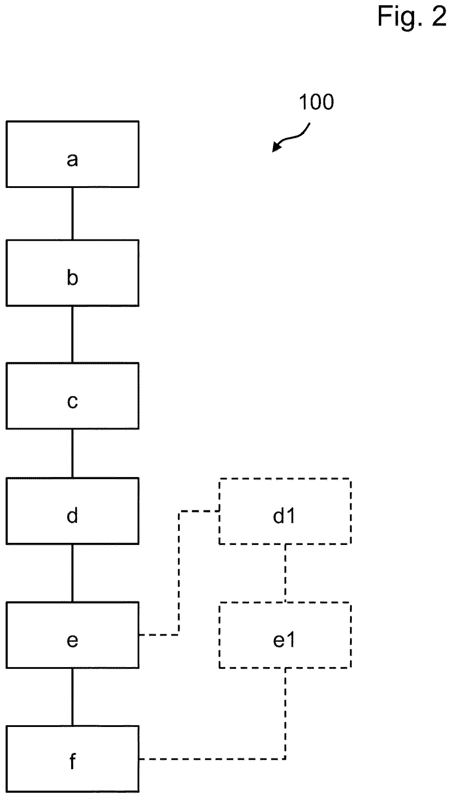

**Fig. 2** zeigt ein schematisches Ablaufdiagramm eines Verfahrens 100 zur Vorauslegung eines Schleifprozesses zur Bearbeitung eines Werkstücks 12 gemäß eines Aufführungsbeispiels der vorliegenden Offenbarung. Dabei kann das Verfahren 100 beispielsweise mittels einer Datenverarbeitungseinrichtung 20 durchgeführt werden.

In einem ersten Schritt a wird eine Werkstückrohkontur 112 eines Rohteils des Werkstücks 12 bereitgestellt. Hierzu können in diesem und in den folgenden Schritten beispielsweise entsprechende Daten aus einer Datenbank eingelesen oder in die Datenverarbeitungseinrichtung 20 importiert werden. In einem weiteren Schritt b wird eine Kontur 113 eines Schleifwerkzeugs 13, in einem Schritt c ein Prozessmodell und in einem Schritt d ein Bearbeitungsmodell für den auszulegenden Schleifprozess bereitgestellt. Die Schritte a bis d sind dabei in ihrer Reihenfolge nicht festgelegt und können in unterschiedlichen Abfolgen durchgeführt werden.

Das Bearbeitungsmodell weist wenigstens einen einstellbaren Bearbeitungsparameter auf, wobei der Bearbeitungsparameter wenigstens einer von Vorschub v_{w}, Zustellung aₑ, Schnittgeschwindigkeit v_{c}, Schleifmodus und/ oder Anzahl an Schleifhüben ist. In einem Schritt e wird wenigstens ein Belastungsmodell an einem Querschnitt des Werkstücks 12 im Schleifprozess berechnet und in einem optionalen Schritt f wird das wenigstens eine Belastungsmodell insbesondere graphisch aufbereitet, beispielsweise auf einem Ausgabemittel 22 der Datenverarbeitungseinrichtung 20 ausgegeben.

In einem optionalen Schritt d1 kann der wenigstens eine Bearbeitungsparameter verändert werden und in einem weiteren optionalen Schritt e1 kann das wenigstens eine Belastungsmodell an dem Querschnitt des Werkstücks erneut berechnet werden. Dieses Belastungsmodell kann in dem Schritt f erneut ausgegeben werden, um so eine Vergleichsmöglichkeit des oder der veränderten Bearbeitungsparameter bzw. des Belastungsmodells oder der Belastungsmodelle zur Verfügung zu stellen.

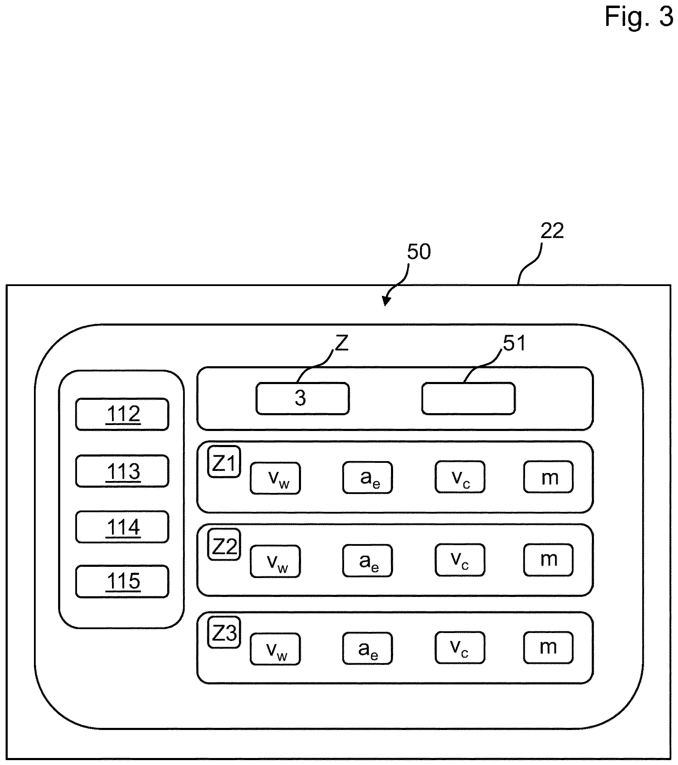

**Fig. 3** zeigt eine schematische Darstellung einer Eingabemaske 50 zum Bereitstellen bzw. Verändern wenigstens eines der einstellbaren Bearbeitungsparameter zur Verwendung in einem erfindungsgemäßen Verfahren 100 zur Vorauslegung eines Schleifprozesses zur Bearbeitung eines Werkstücks 12 insbesondere wie in Fig. 2 dargestellt.

In der Eingabemaske 50 können beispielsweise die Werkstückrohkontur 112 des Werkstücks 12, die Kontur 113 des Schleifwerkzeugs 13, ein Prozessmodell 114 und ein Bearbeitungsmodell 115 bereitgestellt werden.

Für das bereitgestellte bzw. gewählte Bearbeitungsmodell 115 kann eine Anzahl an Schnittvorgängen Z, hier beispielhaft drei Schnittvorgänge Z1 bis Z3 und ein Betrachtungsabschnitt bzw. eine Mindesteingriffsgröße zwischen Werkstückrohkontur 112 und Kontur 113 des Schleifwerkzeugs 13 eingestellt bzw. verändert werden. Pro Schnittvorgang Z1 bis Z3 ist in dem dargestellten Ausführungsbeispiel jeweils ein Vorschub v_{w}, eine Zustellung aₑ, eine Schnittgeschwindigkeit v_{c} des Schleifwerkzeugs 13 und ein Schleifmodus m vorgebbar, einstellbar und/ oder veränderbar.

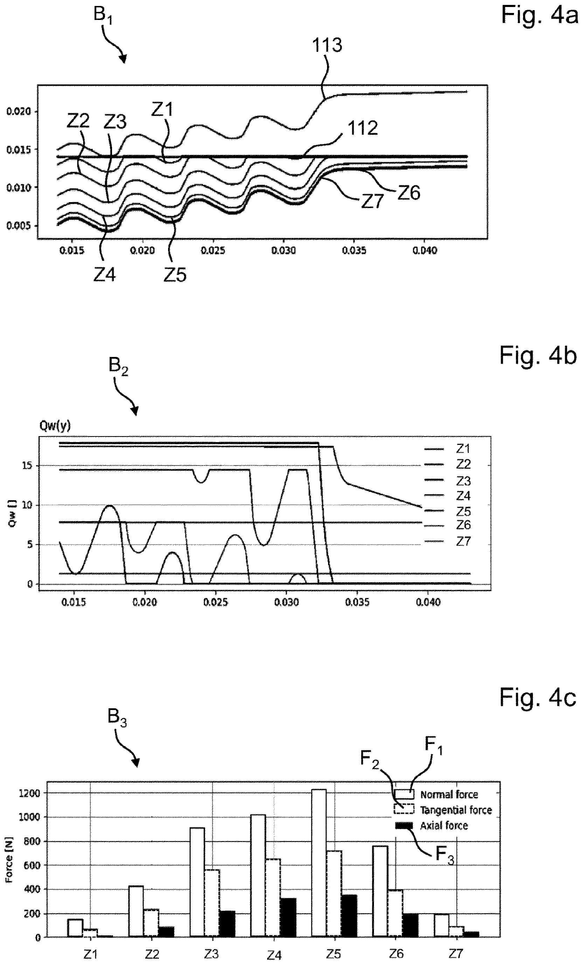

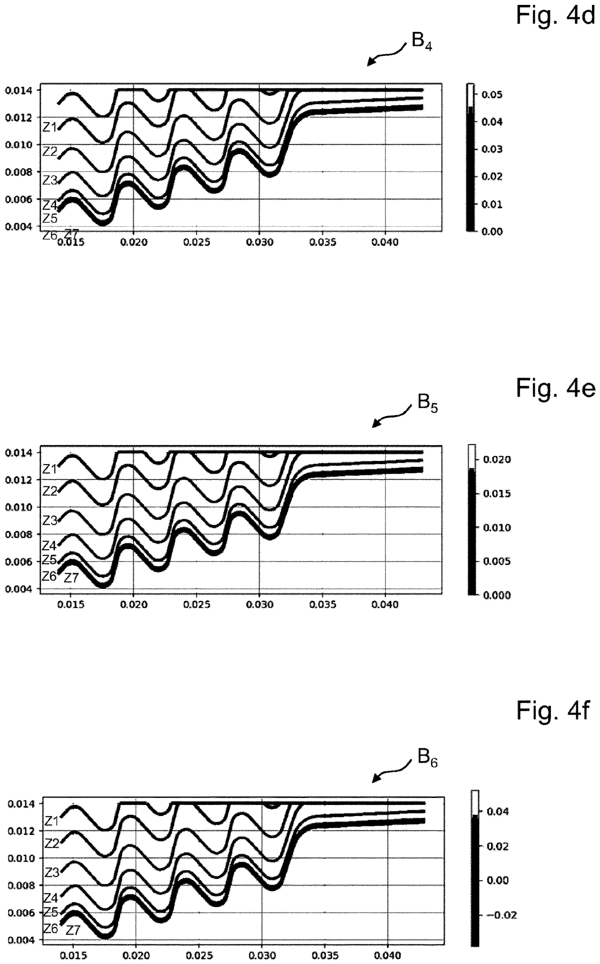

**Fig. 4a bis Fig. 4f** zeigen beispielhafte Belastungsmodelle, wie sie mittels des beispielhaften Verfahrens aus Fig. 2 berechnet werden können.

Beispielhaft umfasst der mittels des Verfahrens 100 berechnete Schleifprozess sieben Schnittvorgänge Z1 bis Z7. In Fig. 4a ist ein erstes Belastungsmodell B₁ gezeigt, dargestellt als Diagramm von Schleifprofilen in dem Querschnitt das Werkstücks 12. Hierbei sind die Werkstückrohkontur 112 des unbearbeiteten Rohteils 12 und die Kontur 113 des Schleifwerkzeugs 13 angetragen sowie die jeweils mittels eines Schleifvorgang Z1 bis Z7 erzeugten Schleifkonturen in dem betrachteten Werkstückquerschnitt.

Fig. 4b zeigt ein zweites beispielhaftes Belastungsmodell B₂ in Form einer Darstellung eines spezifischen Zeitspanvolumens Q_{w}' für jeden Schleifvorgang Z1 bis Z7 und Fig. 4c ein drittes beispielhaftes Belastungsmodell B₃ in Form einer Darstellung von bei der Bearbeitung auftretenden resultierenden Kräften F₁ bis F₃ in normaler, tangentialer und axialer Richtung in Bezug auf die Bearbeitungsoberfläche bzw. die jeweilige Schleifkontur für jeden Schleifvorgang Z1 bis Z7.

Die Fig. 4d bis 4f zeigen ein viertes, fünftes und sechstes beispielhaftes Belastungsmodell B₄, B₅, B₆ in welchen jeweils ein Schleifdruck über den Bearbeitungsquerschnitt für jeden Schleifvorgang Z1 bis Z7 dargestellt ist, wobei das Belastungsmodell B₄ einen Schleifdruck in normaler Richtung, das Belastungsmodell B₅ einen Schleifdruck in tangentialer Richtung und das Belastungsmodell B₆ einen Schleifdruck in axialer Richtung in Bezug auf die jeweilige Bearbeitungsoberfläche des Werkstücks 12 zeigen.

### BEZUGSZEICHENLISTE

- 10: Schleifmaschine
- 11: Welle
- 12: Werkstück
- 13: Schleifwerkzeug
- 14: Werkstückaufnahme
- 20: Datenverarbeitungseinrichtung
- 21: Schnittstelle
- 22: Ausgabemittel / Anzeigeeinrichtung
- 23: Eingabemittel
- 50: Eingabemaske
- 100: Verfahren
- 112: Werkstückrohkontur
- 113: Kontur des Schleifwerkzeugs
- 114: Prozessmodell
- 115: Bearbeitungsmodell
- a bis f: Schritte
- B: Belastungsmodell
- Z: Schleifvorgang
- F: resultierende Kraft
- aₑ: Zustellung
- v_{c}: Schnittgeschwindigkeit
- v_{w}: Vorschub
- m: Schleifmodus

## Patentansprüche

1. Verfahren (100) zur Vorauslegung eines Schleifprozesses zur Bearbeitung eines Werkstücks (12), aufweisend die folgenden Schritte:
a) Bereitstellen einer Werkstückrohkontur (112) eines Rohteils des Werkstücks (12),
b) Bereitstellen einer Kontur (113) eines Schleifwerkzeugs (13),
c) Bereitstellen eines Prozessmodells (114),
d) Bereitstellen eines Bearbeitungsmodells (115) für den Schleifprozess, wobei das Bearbeitungsmodell (115) wenigstens einen einstellbaren Bearbeitungsparameter (aₑ, v_{c}, v_{w}, m, Z) umfasst,
e) Berechnen wenigstens eines Belastungsmodells (B) an einem Querschnitt des Werkstücks (12) im Schleifprozess.

2. Verfahren (100) nach Anspruch 1, wobei der wenigstens eine Bearbeitungsparameter (aₑ, v_{c}, v_{w}, m, Z) aus einer Gruppe ausgewählt ist, welche wenigstens die Bearbeitungsparameter Vorschub (v_{w}), Zustellung (aₑ), Schnittgeschwindigkeit (v_{c}), Schleifmodus (m) und/ oder Anzahl an Schleifvorgängen (Z) aufweist.

3. Verfahren (100) nach wenigstens einem der vorhergehenden Ansprüche, wobei das Prozessmodell (114) in Abhängigkeit eines Werkstoffs des Werkstücks (12) und/ oder wenigstens einer Eigenschaft des Schleifwerkzeugs (13) parametrisiert ist.

4. Verfahren (100) nach wenigstens einem der vorhergehenden Ansprüche, wobei das Belastungsmodell (B) einen Schleifdruck an dem Werkstück (12) aufweist.

5. Verfahren (100) nach wenigstens einem der vorhergehenden Ansprüche, wobei das Belastungsmodell (B) ein spezifisches Zeitspanvolumen (Q_{w}') aufweist.

6. Verfahren (100) nach wenigstens einem der vorhergehenden Ansprüche, wobei das Belastungsmodell (B) eine schleifhubzahlabhängige Schleifkontur aufweist.

7. Verfahren (100) nach wenigstens einem der vorhergehenden Ansprüche, aufweisend die weiteren Schritte:
d1) Verändern wenigstens eines der einstellbaren Bearbeitungsparameter (aₑ, v_{c}, v_{w}, m, Z) und
e1) erneutes Berechnen des wenigstens einen Belastungsmodells (B) an einem Querschnitt des Werkstücks (12) im Schleifprozess.

8. Verfahren (100) nach wenigstens einem der vorhergehenden Ansprüche, aufweisend den weiteren Schritt:
f) Ausgeben des wenigstens einen Belastungsmodells (B).

9. Verfahren zum Simulieren eines Schleifprozesses eines Werkstücks (12), wobei wenigstens ein Bearbeitungsparameter (aₑ, v_{c}, v_{w}, m, Z) für den Schleifprozess auf Basis wenigstens eines in einem Verfahren (100) nach einem der vorhergehenden Ansprüche berechneten Belastungsmodells (B) ausgewählt ist.

10. Verfahren zum Schleifen eines Werkstücks (12), wobei wenigstens ein Bearbeitungsparameter (aₑ, v_{c}, v_{w}, m, Z) des Schleifprozesses auf Basis der Ergebnisse der Durchführung eines Verfahrens (100) nach einem der Ansprüche 1 bis 9 ausgewählt ist.
